# EUROPEAN PATENT APPLICATION

(11) **EP 4 746 241 A1**
(43) Date of publication of application: **20.05.2026**
(21) Application number: 25213788.0
(22) Date of filing: 05.11.2025
(51) Int. Cl.: H02J 7/34, H02J 7/50

(54) **POWER SPLIT SYSTEM FOR MULTIPLE BATTERIES**

(30) Priority: 13.11.2024 US 202463719810 P
(71) Applicant: Carrier Corporation, Palm Beach Gardens, FL 33418 (US)
(72) Inventor: CHAPEAU, Lucas, 76520 Franqueville Saint Pierre (FR)
(74) Representative: Dehns

(57) **Abstract**

A power generation system (101) for transportation refrigeration is provided. The power generation system (101) includes a transport refrigeration unit, TRU, (110) and an electrical system (120). The electrical system (120) includes first and second battery packs (121, 122) disposed in parallel and independent from one another. The electrical system (120) is configured to supply the TRU (110) with electricity from only the first battery pack (121) at a first time and from only the second battery (122) at a second time and switch between the first and second battery packs (121, 122) exclusively supplying the TRU (110) with electricity, transparently to the TRU (110), at an instant between the first and second times such that the TRU (110) remains powered during the instant.

## Description

### BACKGROUND

The present disclosure relates to power storage and generation and to alternative power solutions and, more particularly, to a power split system for multiple batteries.

Refrigerated vehicles transport perishable or temperature-sensitive goods within logistics networks. Refrigerated vehicles typically include a transport refrigeration unit (TRU) that regulates the environment within a storage area of the vehicle, such as a container or trailer, within which the goods are stored during transit. The TRU includes a refrigeration system or the like, which is powered by an energy source. Traditionally, in the case of a tractor-trailer system where the storage area is within the trailer, the trailer has been provided with an internal combustion engine to power the TRU. The internal combustion engine of the TRU is separate from the internal combustion engine of the tractor providing motive force.

In recent years, electrical power sources have been used to power the TRU, rather than internal combustion engines. Such electrical power sources may include batteries that are charged using electrical energy from an electrical grid and/or a generator coupled to a wheel axle of the trailer. This increases the fuel consumption of the internal combustion engine of the tractor, but permits the use of a smaller battery.

### BRIEF DESCRIPTION

According to a first aspect of the invention, a power generation system for transportation refrigeration is provided. The power generation system includes a transport refrigeration unit (TRU) and an electrical system. The electrical system includes first and second battery packs disposed in parallel and independent from one another. The electrical system is configured to supply the TRU with electricity from only the first battery pack at a first time and from only the second battery at a second time and switch between the first and second battery packs exclusively supplying the TRU with electricity, transparently to the TRU, at an instant between the first and second times such that the TRU remains powered during the instant.

Optionally, the switch between the first and the second battery pack is considered to occur transparently if the TRU experiences less than 20% reduction in power for less than 200ms during the instant, preferably, the reduction of power is less than 15% for less than 80ms.

Optionally, the electricity is supplied to the TRU from the first and second battery packs as direct current (DC).

Optionally, the power generation system further includes a supplemental energy storage element to supply the TRU with electricity during the instant.

Optionally, the electrical system further includes an inverter to convert direct current (DC) of the first and second batteries to alternating current (AC) and electricity is supplied to the TRU as the AC.

Optionally, the power generation system further includes one of a capacitor and an additional battery disposed upstream from the inverter to maintain a supply of the electricity to the TRU during the instant.

Optionally, the electrical system includes a load control unit including an inverter to convert direct current (DC) of the first and second battery packs to alternating current (AC) for the TRU, a filter interposed between the load control unit and the TRU to filter the AC and a junction box interposed between the first and second battery packs and the load control unit to provide signal paths from the first and second battery packs to the load control unit.

Optionally, the electrical system further includes one of a capacitor and an additional battery disposed upstream from the inverter to maintain a supply of the electricity to the inverter during the instant.

Optionally, the junction box includes one of a capacitor and an additional battery to maintain a supply of the electricity to the load control unit during the instant.

Optionally, the electrical system further includes one or more of a grid to supply electricity to the filter, a regeneration system to supply electricity to the load control unit from a moving part of a vehicle and a cooling system to cool at least the first and second battery packs.

According to a second aspect of the invention, a power generation system for transportation refrigeration is provided. The power generation system includes a transport refrigeration unit (TRU), an electrical system and a controller. The electrical system includes first and second battery packs disposed in parallel and independent from one another, a load control unit including an inverter to convert direct current (DC) of the first and second battery packs to alternating current (AC) for the TRU and a junction box including a capacitor interposed between the first and second battery packs and the inverter. The controller controls the electrical system to supply the TRU with electricity from only the first battery pack at a first time and from only the second battery at a second time and switch between the first and second battery packs exclusively supplying the TRU with electricity, using the capacitor transparently to the TRU, at an instant between the first and second times such that the TRU remains powered during the instant.

Optionally, the capacitor is chargeable by one or more of the first battery pack during the first time and the second battery pack during the second time.

Optionally, the inverter includes an inverter capacitor to maintain electrical flow during inverter switching.

Optionally, the electrical system further includes a filter interposed between the load control unit and the TRU to filter the AC.

Optionally, the electrical system further includes one or more of a grid to supply electricity to the filter, a regeneration system to supply electricity to the load control unit from a moving part of a vehicle and a cooling system to cool at least the first and second battery packs.

Optionally, the controller is distributed among the first and second batteries and the load control unit.

Optionally, the controller determines the instant in accordance with respective conditions of the first battery pack and the second battery pack.

Optionally, the controller determines the instant in accordance with respective optimizations of the first battery pack and the second battery pack.

Optionally, the TRU experiences less than 20%, preferably 15%, reduction in power for less than 80ms-200ms during the instant.

According to an third aspect of the invention, a method of operating a power generation system for transportation refrigeration is provided. The method includes supplying a transport refrigeration unit (TRU) with electricity from only a first battery pack at a first time, supplying the TRU with electricity from only a second battery pack at a second time and switching between the first and second battery packs exclusively supplying the TRU with electricity, transparently to the TRU, at an instant between the first and second times such that the TRU remains powered during the instant.

Optionally, the TRU experiences less than 20%, preferably 15%, reduction in power for less than 80ms-200ms during the instant.

Optionally, the method further includes determining the instant in accordance with respective conditions of the first battery pack and the second battery pack.

Optionally, the method further includes determining the instant in accordance with respective optimizations of the first battery pack and the second battery pack.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

Certain exemplary embodiments will now be described in greater detail by way of example only and with reference to the accompanying drawings in which::
FIG. 1 is a schematic diagram of a power generation system;
FIG. 2 is a schematic diagram of a power generation system with an inverter;
FIG. 3 is a schematic diagram of a power generation system with at least first and second battery packs and a load control unit of an electrical system;
FIG. 4 is a schematic diagram of some details of the power generation system of FIG. 3;
FIG. 5 is a flow diagram illustrating a method of operating a power generation system; and
FIG. 6 is a graphical illustration of an execution of the method of FIG. 5.

### DETAILED DESCRIPTION

Conventional TRUs that are provided with electrical power typically use only a single battery pack.

In recent developments, several battery packs have been connected together to increase their overall capacity, similar to a range extender, while allowing for each battery pack to be reduced in size without sacrificing range. In an exemplary case, multiple medium capacity batteries would be mounted to a TRU assembly with an increased global capacity though each of the multiple medium capacity batteries are independent from one another. For customers wishing to do extra-long range trips, the increased global capacity could be increased further by repeatedly following the same principle.

It has been observed that an optimal power scenario for a TRU system with multiple independent batteries is one in which power is drawn from each of the batteries in a one-by-one sequence to obtain maximum range. In such cases, when one of the batteries is empty or otherwise fails, the TRU switches off from that empty or failed battery and subsequently begins to draw power from another battery. This can lead to a problem, however, in that the moment of the switch can occur while the TRU is in use whereupon electrical power for the TRU is not continuously available.

Thus, as will be described below, a TRU system is provided with a modular battery pack approach with various ranges of capacities that is capable of switching from one battery to another in a manner that is transparent to the TRU. The TRU, as a result, can operate without experiencing power loss. The bridge-switching capability can be achieved using capacitance or through communication between the concerned batteries.

As used herein in the following description and the claims, the term "transparent" refers to a TRU being powered continuously during an instant of switching between being powered exclusively by a first battery and being powered exclusively by a second battery using an energy storage element to bridge the gap110. During this instant, the TRU remains powered and does not experience any significant loss of power (e.g., less than 20%, preferably 15%, reduction in power for less than 80ms-200ms) that would impact TRU performance in a measurable way.

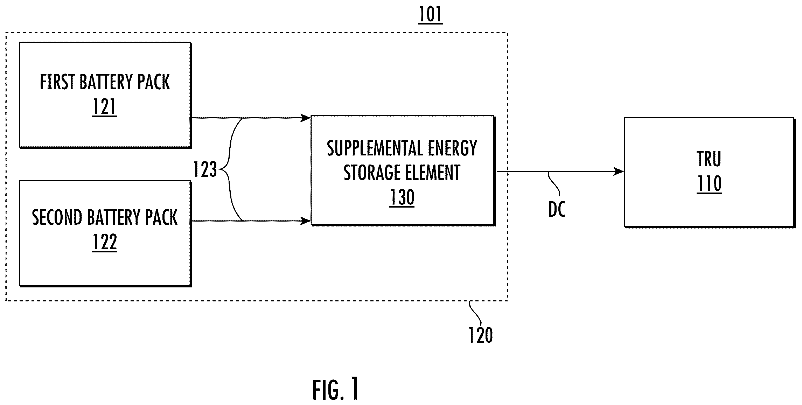

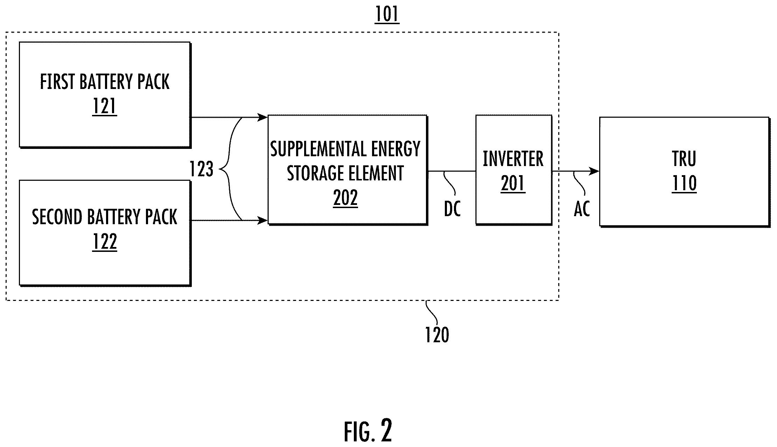

With reference to FIGS. 1 and 2, a power generation system 101 for transportation refrigeration is provided and includes a TRU 110 and an electrical system 120. The electrical system 120 includes a first battery pack 121, a second battery pack 122 and a DC bus 123 to which at least the first and second battery packs 121 and 122 are connected. The first and second battery packs 121 and 122 are disposed in parallel and are independent from one another. The electrical system 120 is configured to supply the TRU 110 with electricity from only the first battery pack 121 at a first time, to supply the TRU 110 with electricity from only the second battery pack 122 at a second time and to switch between the first and second battery packs 121 and 122 exclusively supplying the TRU 110 with electricity, in a manner which is transparent to the TRU 110, at an instant between the first and second times such that the TRU 110 remains powered during the instant and does not experience a loss of power during the instant.

It is to be understood that the electrical system 120 can include one or more additional battery packs in addition to the first and second battery packs 121 and 122 and that the reference to the first and second battery packs 121 and 122 is merely exemplary.

As shown in FIG. 1, electricity can be supplied to the TRU 110 from the first and second battery packs 121 and 122 as direct current (DC). In these or other cases, the TRU 110 can include an inverter or another similar type of electronic device. Also, in these or other cases, the power generation system 101 can include a supplemental energy storage element 130, such as one of a capacitor that stores energy electromechanically and an additional battery that stores energy chemically. The supplemental energy storage element 130 is configured to supply the TRU 110 with electricity during the instant. In the case of the supplemental energy storage element 130 including or being provided as a capacitor, in particular, the capacitor can be charged during the supplying of the TRU 110 with the electricity from only the first battery pack 121 and can be discharged at the instant between the first and second times such that the TRU 110 remains powered during the instant and does not experience a loss of power during the instant. The charging and discharging of the capacitor (i.e., the operation of the supplemental energy storage element 130) would thus be transparent to the TRU 110.

As noted above, during the instant, the TRU 110 remains powered and does not experience any significant loss of power (e.g., less than 20%, preferably 15%, reduction in power for less than 80ms-200ms) that would impact TRU 110 performance in a measurable way.

As shown in FIG. 2, the electrical system 120 can further include an inverter 201, which is configured to convert DC of the first and second batteries 121 and 122 to alternating current (AC). In these or other cases, the electricity can be supplied to the TRU 110 as the AC. Also, in these or other cases, the power generation system 101 can further include a supplemental energy storage element 202, such as one of a capacitor that stores energy electromechanically and an additional battery that stores energy chemically. The supplemental energy storage element 202 is disposed upstream from the inverter 201 and is configured to maintain a supply of the electricity to the TRU 110 during the instant. In the case of the supplemental energy storage element 202 including or being provided as a capacitor, in particular, the capacitor can be charged during the supplying of the TRU 110 with the electricity from only the first battery pack 121 and can be discharged at the instant between the first and second times such that the TRU 110 remains powered during the instant and does not experience a loss of power during the instant. The charging and discharging of the capacitor (i.e., the operation of the supplemental energy storage element 202) would thus be transparent to the TRU 110.

As noted above, during the instant, the TRU 110 remains powered and does not experience any significant loss of power (e.g., less than 20%, preferably 15%, reduction in power for less than 80ms-200ms) that would impact TRU 110 performance in a measurable way.

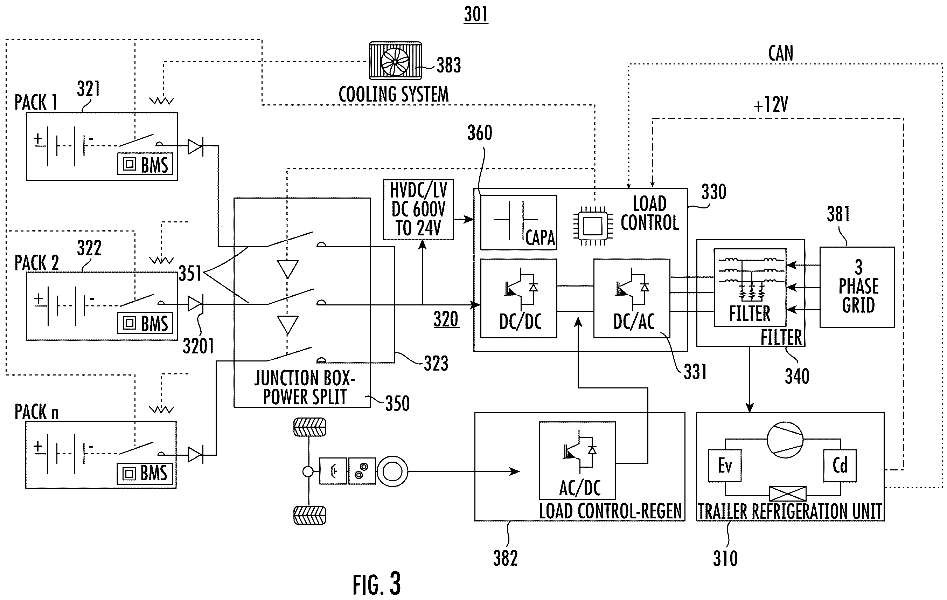

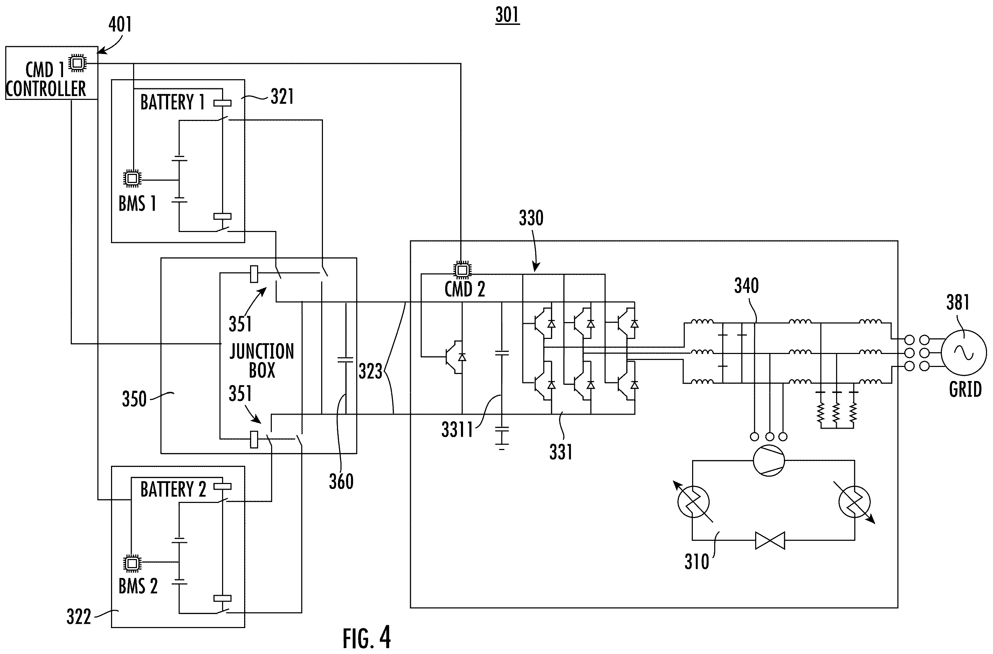

With reference to FIGS. 3 and 4, a power generation system 301 for transportation refrigeration is provided and includes a TRU 310 and an electrical system 320. The electrical system 320 includes a first battery pack 321, a second battery pack 322 and a DC bus 323 (it is to be understood that the electrical system 320 can include one or more additional battery packs in addition to the first and second battery packs 321 and 322 and that the reference to the first and second battery packs 321 and 322 is merely exemplary). The first and second battery packs 321 and 322 are disposed in parallel and are independent from one another. The electrical system 320 is configured to supply the TRU 310 with electricity from only the first battery pack 321 at a first time, to supply the TRU 310 with electricity from only the second battery pack 322 at a second time and to switch between the first and second battery packs 321 and 322 exclusively supplying the TRU 310 with electricity, in a manner which is transparent to the TRU 310, at an instant of switching between the first and second times such that the TRU 310 remains powered during the instant of the switching and does not experience a loss of power during the instant of the switching.

As noted above, during the instant, the TRU 310 remains powered and does not experience any significant loss of power (e.g., less than 20%, preferably 15%, reduction in power for less than 80ms-200ms) that would impact TRU 310 performance in a measurable way.

The electrical system 320 can further include a load control unit 330, a filter 340 and a junction box 350, all of which are coupled to the DC bus 323. The load control unit 330 includes an inverter 331 that is configured to convert DC of the first and second battery packs 321 and 322 to AC for the TRU 310. The inverter 331 can include an inverter capacitor 3311 (see FIG. 4) to maintain electrical flow during inverter switching. The filter 340 is interposed between the load control unit 330 and the TRU 310 to filter the AC. The junction box 350 is interposed between the first and second battery packs 321 and 322 and the load control unit 330 to provide single discrete signal paths 351 from each of the first and second battery packs 321 and 322 to the load control unit 330. Each of the signal paths 351 can be independently opened and closed by switches. The switches of the junction box 350 can include or be provided as insulated-gate bipolar transistors (IGBTs) and can be automated.

The electrical system 320 further includes a supplemental energy storage element 360 (see FIG. 4), such as one of a capacitor that stores energy electromechanically and an additional battery that stores energy chemically. The supplemental energy storage element 360 is disposed upstream from the inverter 331 to maintain a supply of the electricity to the inverter 331 during the instant of the switching. In the case of the supplemental energy storage element 360 including or being provided as a capacitor, in particular, the capacitor can be charged during the supplying of the TRU 310 with the electricity from only the first battery pack 321 during the first time and can be discharged at the instant between the first and second times such that the TRU 110 remains powered during the instant of the switching and does not experience a loss of power during the instant of the switching. The charging and discharging of the capacitor (i.e., the operation of the supplemental energy storage element 360) are thus transparent to the TRU 310. The supplemental energy storage element 360, the capacitor and/or the additional battery can also be charged during the supplying of the TRU 310 with the electricity from only the second battery pack 322 during the second time.

In accordance with embodiments, the supplemental energy storage element 360 can be included or provided in the junction box 350 as shown in FIG. 4, the supplemental energy storage element 360 can be disposed between the junction box 350 and the load control unit 330 and/or the supplemental energy storage element 360can be included or provided in the load control unit 330 as shown in FIG. 3.

The electrical system 320 can further include at least one or more of a grid 381 configured to supply electricity to the filter 340, a regeneration system 382 configured to supply electricity to the load control unit 330 from a moving part of a vehicle (i.e., an axle of a truck/trailer) and a cooling system 383 configured to cool at least the first and second battery packs 321 and 322. Each of the at least one or more of the grid 381, the regeneration system 382 and the cooling system 383 can be coupled with the DC bus 323.

In accordance with embodiments, each of the first battery pack 321 and the second battery pack 322 (and any other additional battery pack) can be provided with a diode 3201 at battery pack outputs. Each diode 3201 can provide for alternative switching capabilities and/or options and for reduction in a size of the supplemental energy storage element 360. For example, when a diode 3201 heats, it may not be desirable to pass current through the diode 3201. An additional switching arrangement can thus be disposed in parallel with each diode 3201 in order to bypass a given diode 3201 that is heated.

With continued reference to FIG. 4, the power generation system 301 can further include a controller 401. The controller 401 can be distributed among at least the first and second batteries 321 and 322 and the load control unit 330. The controller 401 can include a processor, a memory unit and an input/output (I/O) unit by which the processor is communicative with the electrical system 320. The memory unit has executable instructions stored thereon, which are readable and executable by the processor. When the executable instructions are read and executed by the processor, the processor is caused to operate as described herein. That is, when the executable instructions are read and executed by the processor, the processor is caused to control the electrical system 320 via the I/O unit to supply the TRU 310 with the electricity from only the first battery pack 321 at the first time, to supply the TRU 310 with the electricity from only the second battery pack 322 at the second time and switch between the first and second battery packs 321 and 322 exclusively supplying the TRU 310 with the electricity, using the supplemental energy storage element 360 transparently to the TRU 310, at the instant between the first and second times such that the TRU 310 remains powered during the instant and does not experience a loss of power during the instant.

The processor and the controller 401 as a whole can be configured to determine when the instant is to be occur in accordance with respective conditions of the first battery pack 321 and the second battery pack 322 (i.e., so as to time the instant for when the first battery pack 321 runs out of sufficient charge and as the second battery pack 322 ramps up) and/or to determine when the instant is to occur in accordance with respective optimizations of the first battery pack 321 and the second battery pack 322.

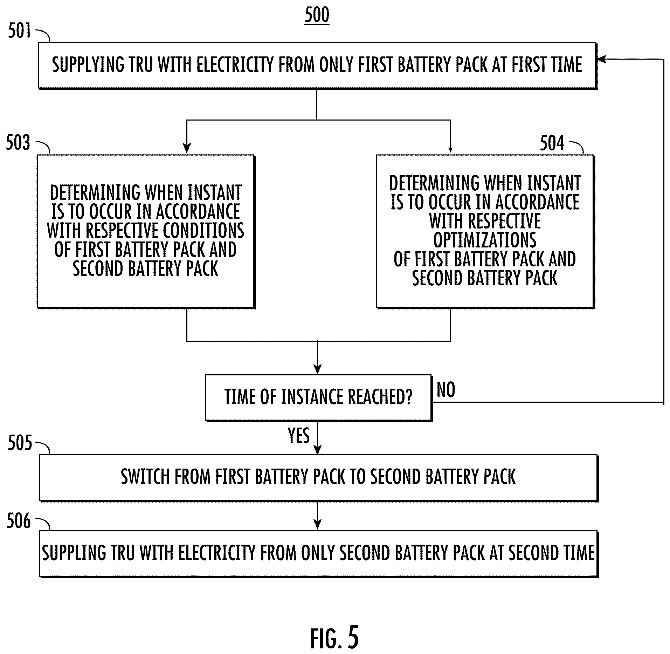

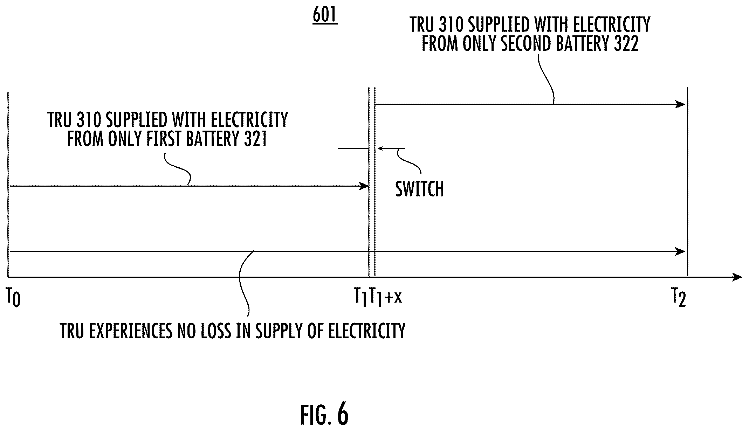

With reference to FIGS. 5 and 6, a method 500 of operating a power generation system for transportation refrigeration, such as the power generation system 101 and the power generation system 301 described above, is provided. The method 500 includes supplying a TRU with electricity from only a first battery pack at a first time 501, supplying the TRU with electricity from only a second battery pack at a second time 506 and switching between the first and second battery packs exclusively supplying the TRU with electricity, transparently to the TRU, at an instant between the first and second times 505 such that the TRU remains powered during the instant and does not experience a loss of power during the instant. Prior to the switching of 505, the method 500 can further include one or more of determining when the instant is to occur in accordance with respective conditions of the first battery pack and the second battery pack 503 and determining when the instant is to occur in accordance with respective optimizations of the first battery pack and the second battery pack 504.

An execution of the method 500 is illustrated in the graph 601 of FIG. 6. As shown in the graph 601 of FIG. 6, a TRU is supplied with electricity from only a first battery pack at a first time from time T₀ to time T₁. At some point during the first time prior to time T₁, a determination is made as to when the instant of the switching is to occur (i.e., from time T₁ to time T₁₊ₓ, where x is short relative to T₁). The switching thus occurs during short time T₁ to time T₁₊ₓ (i.e., as the capacitor 360 discharges). Subsequently, the TRU is supplied with electricity from only the first battery pack at a second time from time T₁₊ₓ to time T₂. Thus, the TRU remains powered at all instants and moments from time T₀ to time T2 and experiences no significant loss in supply of electricity at any instant or moment from time T₀ to time T₂ that would impact TRU performance in a measurable way (e.g., less than 20%, preferably 15%, reduction in power for less than 80ms-200ms).

In accordance with embodiments, instant or the time T₁ to the time T₁₊ₓ, where x is short relative to T₁, can be less than about 80ms-200ms. This time can be shortened through the use of IGBTs for at least the switches in at least the junction box 350. The time can be further shortened by reducing loads before switching. That is, where the supplemental energy storage device 360 of FIGS. 3 and 4 includes or is provided as a capacitor, load reduction can allow for a reduction in capacitor size as inrush current when commuting will be lower.

While the description provided above generally relates to cases in which the instant of the switching occurs at a determined time, embodiments exist in which this is not the case. For example, the instant of the switching can occur at a time when the TRU is non-operational and/or when the TRU is operational but between cycles. In these or other cases, the switching can be transparent to the TRU generally as described above or executed in another manner (i.e., automatically or manually) that may not be necessarily transparent to the TRU.

In addition, while the description provided above generally relates to cases in which the junction box does not close signal paths for the first and second battery packs at the same time, embodiments exist in which this is the case. In these or other cases, the first and second battery packs can be used to charge one another. Alternatively, in these or other cases, a diode protection system can be provided to prevent the first and second battery packs from charging one another.

Technical effects and benefits of the present disclosure are the provision of a TRU system that allows customers the opportunity to choose medium capacity battery arrangements for short to medium range trips while still providing those customers with the option of extended capacity for long range trips. The TRU system also exhibits the capability to compensate for battery aging over time. Additional technical effects and benefits of the present disclosure can include battery splitting options being enabled (i.e., as opposed to single battery usage or purely parallel usage). This may be especially true in terms of redundancy, efficiency and power management in a dynamic environment, such as for temperature management and over-temperature instances.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent to those of ordinary skill in the art without departing from the scope of the invention as defined by the appended claims. The embodiments were chosen and described in order to best explain the principles of the invention and the practical application, and to enable others of ordinary skill in the art to understand the disclosure for various embodiments with various modifications as are suited to the particular use contemplated.

While the preferred embodiments of the invention have been described, it will be understood that those skilled in the art, both now and in the future, may make various improvements and enhancements which fall within the scope of the claims which follow. These claims should be construed to maintain the proper protection for the disclosure first described.

The following clauses set out features of the invention which may or may not presently be claimed in this application, but which may form the basis for future amendment or a divisional application.
1. A power generation system for transportation refrigeration, the power generation system comprising: a transport refrigeration unit (TRU); and an electrical system comprising first and second battery packs disposed in parallel and independent from one another, the electrical system being configured to: supply the TRU with electricity from only the first battery pack at a first time and from only the second battery at a second time, and switch between the first and second battery packs exclusively supplying the TRU with electricity, transparently to the TRU, at an instant between the first and second times such that the TRU remains powered during the instant.
2. The power generation system according to clause 1, wherein the electricity is supplied to the TRU from the first and second battery packs as direct current (DC).
3. The power generation system according to clause 2, further comprising a supplemental energy storage element to supply the TRU with electricity during the instant.
4. The power generation system according to any of clauses 1 to 3, wherein the electrical system further comprises an inverter to convert direct current (DC) of the first and second batteries to alternating current (AC) and electricity is supplied to the TRU as the AC.
5. The power generation system according to clause 4, further comprising one of a capacitor and an additional battery disposed upstream from the inverter to maintain a supply of the electricity to the TRU during the instant.
6. The power generation system according to any of clauses 1 to 5, wherein the electrical system comprises: a load control unit comprising an inverter to convert direct current (DC) of the first and second battery packs to alternating current (AC) for the TRU; a filter interposed between the load control unit and the TRU to filter the AC; and a junction box interposed between the first and second battery packs and the load control unit to provide signal paths from the first and second battery packs to the load control unit.
7. The power generation system according to clause 6, wherein the electrical system further comprises one of a capacitor and an additional battery disposed upstream from the inverter to maintain a supply of the electricity to the inverter during the instant.
8. The power generation system according to clause 6, wherein the junction box comprises one of a capacitor and an additional battery to maintain a supply of the electricity to the load control unit during the instant.
9. The power generation unit according to any of clauses 1 to 8, wherein the TRU experiences less than 15-20% reduction in power for less than 80ms-200ms during the instant.
10. A power generation system for transportation refrigeration, comprising: a transport refrigeration unit (TRU); an electrical system comprising first and second battery packs disposed in parallel and independent from one another, a load control unit comprising an inverter to convert direct current (DC) of the first and second battery packs to alternating current (AC) for the TRU and a junction box comprising a capacitor interposed between the first and second battery packs and the inverter; and a controller to control the electrical system to: supply the TRU with electricity from only the first battery pack at a first time and from only the second battery at a second time, and switch between the first and second battery packs exclusively supplying the TRU with electricity, using the capacitor transparently to the TRU, at an instant between the first and second times such that the TRU remains powered during the instant.
11. The power generation system according to clause 10, wherein the capacitor is chargeable by one or more of the first battery pack during the first time and the second battery pack during the second time.
12. The power generation system according to clause 10, wherein the inverter comprises an inverter capacitor to maintain electrical flow during inverter switching.
13. The power generation system according to clause 10, wherein the electrical system further comprises a filter interposed between the load control unit and the TRU to filter the AC.
14. The power generation unit according to any of clauses 10 to 13, wherein the electrical system further comprises one or more of: a grid to supply electricity to the filter; a regeneration system to supply electricity to the load control unit from a moving part of a vehicle; and a cooling system to cool at least the first and second battery packs.
15. The power generation system according to any of clauses 10 to 14, wherein the controller is distributed among the first and second batteries and the load control unit.
16. The power generation system according to any of clauses 10 to 14, wherein the controller determines the instant in accordance with one or more of respective conditions of the first battery pack and the second battery pack and respective optimizations of the first battery pack and the second battery pack.
17. The power generation system according to any of clause 10, wherein the TRU experiences less than 15-20% reduction in power for less than 80ms-200ms during the instant.
18. A method of operating a power generation system for transportation refrigeration, the method comprising: supplying a transport refrigeration unit (TRU) with electricity from only a first battery pack at a first time; supplying the TRU with electricity from only a second battery pack at a second time; and switching between the first and second battery packs exclusively supplying the TRU with electricity, transparently to the TRU, at an instant between the first and second times such that the TRU remains powered during the instant.
19. The method according to clause 18, wherein the TRU experiences less than 15-20% reduction in power for less than 80ms-200ms during the instant.
20. The method according to either of clause 18 or 19, further comprising determining the instant in accordance with one or more of respective conditions of the first battery pack and the second battery pack and respective optimizations of the first battery pack and the second battery pack.

## Claims

1. A power generation system (101) for transportation refrigeration, the power generation system comprising:
a transport refrigeration unit, TRU, (110); and
an electrical system (120) comprising first and second battery packs (121, 122) disposed in parallel and independent from one another,
the electrical system being configured to:
supply the TRU with electricity from only the first battery pack at a first time and from only the second battery at a second time, and
switch between the first and second battery packs exclusively supplying the TRU with electricity, transparently to the TRU, at an instant between the first and second times such that the TRU remains powered during the instant.

2. The power generation system (101) according to claim 1, wherein the electricity is supplied to the TRU (110) from the first and second battery packs (121, 122) as direct current, DC.

3. The power generation system (101) according to claim 1 or 2, further comprising a supplemental energy storage element (130) to supply the TRU (110) with electricity during the instant.

4. The power generation system (101) according to any of claims 1 to 3, wherein the electrical system (120) further comprises an inverter (201) to convert direct current, DC, of the first and second batteries (121, 122) to alternating current, AC, and electricity is supplied to the TRU (110) as the AC, and wherein
the power generation system (101) optionally further comprises one of a capacitor and an additional battery disposed upstream from the inverter (201) to maintain a supply of the electricity to the TRU (110) during the instant.

5. The power generation system (301) according to any of claims 1 to 4, wherein the electrical system (320) comprises:
a load control unit (330) comprising an inverter (331) to convert direct current, DC, of the first and second battery packs (321, 322) to alternating current, AC, for the TRU (310);
a filter (340) interposed between the load control unit and the TRU to filter the AC; and
a junction box (350) interposed between the first and second battery packs and the load control unit to provide signal paths from the first and second battery packs to the load control unit.

6. The power generation system (301) according to claim 5, wherein the electrical system (320) further comprises one of a capacitor and an additional battery disposed upstream from the inverter (331) to maintain a supply of the electricity to the inverter during the instant, and/or
wherein the junction box (350) comprises one of a capacitor and an additional battery to maintain a supply of the electricity to the load control unit (330) during the instant.

7. The power generation system (101; 301) according to any of claims 1 to 6, wherein the TRU (110; 310) experiences less than 15-20% reduction in power for less than 80ms-200ms during the instant.

8. A power generation system (301) for transportation refrigeration, comprising:
a transport refrigeration unit, TRU, (310);
an electrical system (320) comprising first and second battery packs (321, 322) disposed in parallel and independent from one another, a load control unit (330) comprising an inverter (331) to convert direct current, DC, of the first and second battery packs to alternating current, AC, for the TRU and a junction box (350) comprising a capacitor interposed between the first and second battery packs and the inverter; and
a controller (401) to control the electrical system to:
supply the TRU with electricity from only the first battery pack at a first time and from only the second battery at a second time, and
switch between the first and second battery packs exclusively supplying the TRU with electricity, using the capacitor transparently to the TRU, at an instant between the first and second times such that the TRU remains powered during the instant.

9. The power generation system (301) according to claim 8, wherein the capacitor is chargeable by one or more of the first battery pack (321) during the first time and the second battery pack (322) during the second time; and/or
wherein the inverter (331) comprises an inverter capacitor (3311) to maintain electrical flow during inverter switching; and/or
wherein the electrical system further comprises a filter (340) interposed between the load control unit (330) and the TRU (310) to filter the AC.

10. The power generation system (301) according to either of claims 8 or 9, wherein the electrical system (320) further comprises one or more of:
a grid (381) to supply electricity to the filter (340);
a regeneration system (382) to supply electricity to the load control unit (330) from a moving part of a vehicle; and
a cooling system (383) to cool at least the first and second battery packs.

11. The power generation system (301) according to any of claims 8 to 10, wherein the controller (401) is distributed among the first and second batteries (321, 322) and the load control unit (330).

12. The power generation system (301) according to any of claims 8 to 11, wherein the controller (401) determines the instant in accordance with one or more of respective conditions of the first battery pack (321) and the second battery pack (322) and respective optimizations of the first battery pack and the second battery pack.

13. The power generation system (301) according to any of claims 8 to 12, wherein the TRU (310) experiences less than 15-20% reduction in power for less than 80ms-200ms during the instant.

14. A method (500) of operating a power generation system (101) for transportation refrigeration, the method comprising:
supplying (501) a transport refrigeration unit, TRU, (110) with electricity from only a first battery pack (121) at a first time;
supplying (506) the TRU with electricity from only a second battery pack (122) at a second time; and
switching (505) between the first and second battery packs exclusively supplying the TRU with electricity, transparently to the TRU, at an instant between the first and second times such that the TRU remains powered during the instant.

15. The method (500) according to claim 14, wherein the TRU (110) experiences less than 15-20% reduction in power for less than 80ms-200ms during the instant, and/or further comprising determining (503, 504) the instant in accordance with one or more of respective conditions of the first battery pack (121) and the second battery pack (122) and respective optimizations of the first battery pack and the second battery pack.
